Europäisches Patentamt

European Patent Office

Office européen des brevets

(19)

(11) Veröffentlichungsnummer: **0 420 028 A2**

## (12) EUROPÄISCHE PATENTANMELDUNG

(21) Anmeldenummer: 90118046.3

(22) Anmeldetag: 19.09.90

(51) Int. Cl.⁵: **G02B 6/30, G02B 6/255**

(30) Priorität: 29.09.89 DE 3932688

(43) Veröffentlichungstag der Anmeldung:
03.04.91 Patentblatt 91/14

(84) Benannte Vertragsstaaten:
**DE FR GB IT**

(71) Anmelder: **Siemens Aktiengesellschaft
Wittelsbacherplatz 2
W-8000 München 2(DE)**

(72) Erfinder: **Stein, Karl-Ulrich, Dr.
Isartalstrasse 14
W-8025 Unterhaching(DE)**

(54) **Koppelanordnung zum optischen Koppeln einer Faser mit einem auf einem Substrat integrierten planaren optischen Wellenleiter.**

(57) 2.1. Eine Koppelanordnung der genannten Art, bei der die Faser in einer zum planaren Wellenleiter führenden, V-förmigen Nut des Substrats angeordnet ist, soll mittels anisotropen Ätzens ohne großen Aufwand und kostengünstig herstellbar sein, wobei eine dämpfungsarme Stoßkopplung realisiert ist.

2.2. Dazu ist die Stirnfläche (21) des planaren Wellenleiters (2) an einem Ende (bei 21) eines in die Nut (3) ragenden Vorsprungs (5) des Substrats (1) angeordnet, wobei das Ende (bei 21) dieses Vorsprungs (5) mit der Stirnfläche (41) der Faser (4) in engem Kontakt steht.

2.3. Anwendung bei Silizium-Mikromechanik-Einheiten

FIG 2

EP 0 420 028 A2

**KOPPELANORDNUNG ZUM OPTISCHEN KOPPELN EINER FASER MIT EINEM AUF EINEM SUBSTRAT INTEGRIERTEN PLANAREN OPTISCHEN WELLENLEITER**

Die Erfindung betrifft eine Koppelanordnung zum optischen Koppeln einer Faser mit einem auf einem Substrat integrierten planaren optischen Wellenleiter nach dem Oberbegriff des Patentanspruchs 1.

Eine Koppelanordnung der genannten Art ist in der europäischen Patentanmeldung 89 116 456.8 (= GR 88 P 1674) vorgeschlagen. Bei dieser Koppelanordnung ist die Stirnfläche des planaren Wellenleiters in einer Endfläche der Nut mit V-förmigem Profil angeordnet. Diese Nut wird so hergestellt, daß in das Substrat zwei schlitzförmige Kanäle von der Oberfläche schräg aufeinander zu in die Tiefe geätzt werden, bis sie sich treffen oder kreuzen und dadurch eine durch die Kanäle vom Substrat getrennte Brücke oder Zunge entsteht, die abgespalten wird, beispielsweise in einem Ultraschallbad.

Nuten mit V-förmigem Profil können auch durch anisotropes Ätzen in geeigneten Materialien hergestellt werden, beispielsweise in einem Siliziumkristall der Orientierung (100). Da jedoch die Stirnflächen solcher Nuten, bedingt durch das anisotrope Ätzen, nicht vertikal, sondern schrag zur Längsachse der Nut sind, kann eine in eine solche Nut eingebrachte Faser mit ihrer Stirnfläche an die in oder an der schrägen Stirnfläche der Nut angeordnete Stirnfläche des planaren Wellenleiters herangebracht werden, so daß zwischen diesen Stirnflächen der Faser und des planaren Wellenleiters ein relativ großer Abstand entsteht, der große Koppelverluste verursacht.

Aufgabe der Erfindung ist es, eine Koppelanordnung der eingangs genannten Art anzugeben, die mittels anisotropen Ätzens ohne großen Aufwand und kostengünstig herstellbar ist, und bei der die Stirnflächen der Faser und des planaren Wellenleiters dennoch in engen Kontakt miteinander bringbar sind, so daß die Koppelverluste gering sind.

Diese Aufgabe wird durch die im kennzeichnenden Teil des Patentanspruchs 1 angegebenen Merkmale gelöst.

Dadurch, daß bei der erfindungsgemäßen Anordnung der Kern der Faser in den Richtungen quer zur Faser hochgenau festgelegt werden kann, ist diese Anordnung selbstjustierend. Die Kopplung der erfindungsgemäßen Anordnung kann durch entsprechende Klemmvorrichtung lösbar oder beispielsweise durch eine Fixierung mittels Kunststoff fest gestaltet werden. Durch entsprechende Gestaltung des planaren optischen Wellenleiters in Breite und Dicke, d.h. Anpassung an den Kern der Faser, vorzugsweise Monomodefaser, können mit der eine

Stoßkopplung realisierenden erfindungsgemäßen Anordnung Dämpfungswerte erreicht werden, die im Bereich von 0,2 dB liegen.

Die geringe Dämpfung der erfindungsgemäßen Anordnung kann vorteilhafterweise durch die im Anspruch 2 angegebene Maßnahme weiter verringert werden.

Für Anwendungen, die geringere Stoßkopplung erfordern, kann die im Anspruch 3 angegebene Ausgestaltung der erfindungsgemäßen Anordnung verwendet werden.

Insbesondere im Fall des Anspruchs 3 ist es zweckmäßig, die im Anspruch 4 angegebene Maßnahme zu verwenden.

Ein einfaches und kostengünstiges Verfahren zur Herstellung einer erfindunsgemäßen Anordnung ist im Anspruch 5 angegeben.

Die Ausgestaltung nach Anspruch 3 der erfindungsgemäßen Anordnung nach Maßgabe des Anspruchs 6 hergestellt. Eine dort angegebene Schweißtechnik ist im Optoelektronik-Magazin, Vol. 4, Nr. 6/7, 1988, S. 556-563 beschrieben. Sie benutzt ein Aufschmelzen im Lichtbogen, mit dem vorteilhafterweise kon trolliert durch eine geregelte Positionierung vor und während der Anwendung des Lichtbogens der planare Wellenleiter mit der Faser verschweißt wird.

Als anisotrop ätzbares Material kann bei dem erfindungsgemäßen Verfahren vorteilhaft Silizium verwendet werden (Anspruch 7). Geeignet ist das genannte Silizium der Orientierung (100) und es wird vorteilhafterweise in einem Siliziumchip, der eine optoelektronische integrierte Schaltung trägt und diese Orientierung (100) hat, mit dem erfindungsgemäßen Verfahren die Nut mit V-förmigem Profil erzeugt, in welche die Faser eingelegt werden kann.

Die Erfindung wird in der folgenden Beschreibung anhand der Figuren beispielhaft näher erläutert. Es zeigen:

Figur 1 in schematischer Darstellung einen Schnitt durch ein Substrat mit einem integrierten planaren optischen Wellenleiter und einer durch anisotropes Ätzen erzeugten Nut mit V-förmigem Profil in längsaxialer Richtung der Nut, wobei in die Nut eine Faser eingelegt ist,

Figur 2 in der Darstellung nach Figur 1 ein Ausführungsbeispiel einer erfindungsgemäßen Koppelanordnung mit Stoßkopplung zwischen der in die Nut eingelegten Faser und dem planaren Wellenleiter, und

Figur 3 in der Darstellung nach Figur 1 und 2 ein anderes Ausführungsbeispiel einer erfindungsgemäßen Koppelanordnung, bei welcher die in die Nut eingelegte Faser und der planare Wellenleiter verschweißt sind.

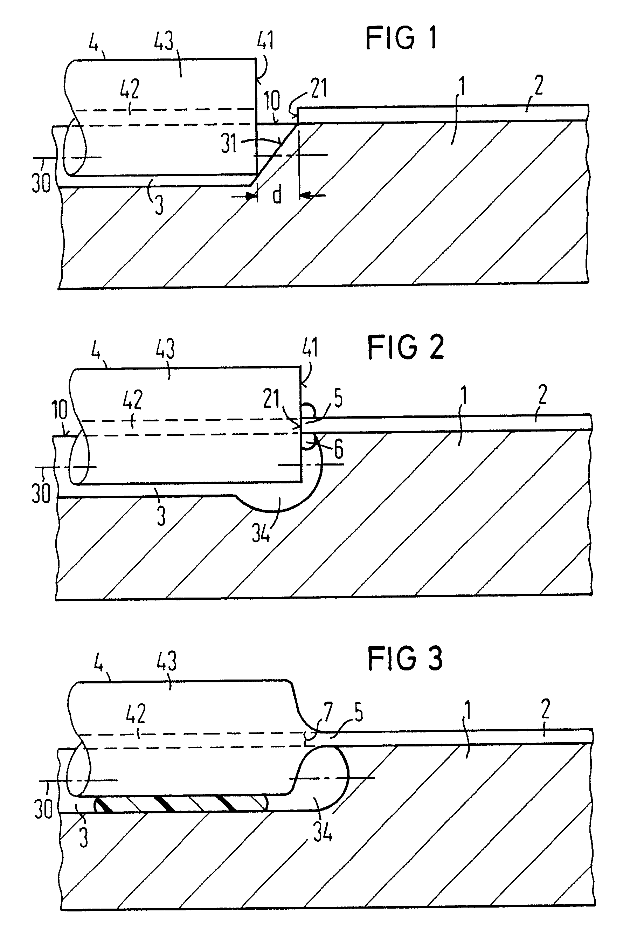

Die in den Figuren 2 und 3 dargestellten Koppelanordnungen werden beispielsweise wie folgt hergestellt: In der Oberfläche 10 (siehe Figur 1) eines Substrats 1 aus Silizium der Orientierung (100) mit einem an der Oberfläche 10 integrierten planaren optischen Wellenleiter 2 wird durch anisotropes Ätzen eine Nut 3 mit V-förmigem Profil geätzt, die, bedingt durch das anisotrope Ätzen, eine schräg zur Längsachse 30 der Nut 3 angeordnete Endfläche 31 aufweist. Beispielsweise kann der planare Wellenleiter 2 ein in axialer Richtung der Nut verlaufender streifenförmiger Wellenleiter sein, der zu einer auf dem Substrat 1 integrierten optoelektronischen Schaltung führt.

Durch die schräge Endfläche 31 der Nut 3 kann eine in diese Nut 3 eingelegte Faser 4 mit Kern 42 und Mantel 43 nicht ganz an die der Nut 3 zugekehrte Stirnfläche 21 des planaren Nellen3eiters 2 herangebracht werden, sondern es bleibt eine unvermeidliche störende Distanz d zwischen der dem planaren Wellenleiter 2 zugekehrten Stirnfläche 41 der Faser 4 und der Stirnfläche 21 des planaren Wellenleiters 2, so wie es in Figur 1 dargestellt ist.

Diese störende Distanz d wird erfindungsgemäß dadurch vermieden, daß die Stirnfläche 21 des planaren Wellenleiters 2 an einem Ende eines in die Nut 2 ragenden Vorsprungs 5 des Substrats 1 angeordnet ist, wobei das Ende des Vorsprungs 5 auch aus der Stirnfläche 23 des planaren Wellenleiters 2 allein bestehen kann. Dieser Vorsprung 5 kann durch isotropes Ätzen des Substrats 3 an der schrägen Endfläche 31 der Nut 3 erzeugt werden, das einen Endbereich 34 der Nut 3 erzeugt, in dem der planare Wellenleiter 2 bei dessen Stirnfläche 21 unterätzt ist und dadurch der Vorsprung 5 erzeugt ist. Durch Schaffung des Vorsprungs 5 kann die Stirnfläche 31 der in die Nut 3 eingelegten Faser 4 in engen Kontakt mit der Stirnfläche 21 des planaren Wellenleiters 2 gebracht werden, wodurch eine dämpfungsarme Stoßkopplung zwischen der Faser 4 und dem Wellenleiter 2 realisiert ist, die durch Einbringen eines Imersionsmittels 6, beispielsweise Imersionsöl, zwischen diese Stirnflächen 41 und 21 verbessert werden kann.

Das andere Ausführungsbeispiel nach Figur 3, das auf die gleiche Weise wie das Beispiel nach Figur 2 hergestellt werden kann, unterscheidet sich von diesem letztgenannten Bei spiel im wesentlichen dadurch, daß die Faser 4 und der Wellenleiter 2 an ihren einander zugekehrten Stirnflächen miteinander verschmolzen sind, wobei der Bereich der Schmelzverbindung in der Figur 3 mit 7 bezeichnet ist. Diese Schmelzverbindung kann durch das obengenannte bekannte Verfahren hergestellt werden.

Die in die Nut 3 eingelegte Faser 4 kann durch Kunststoff 8, beispielsweise eine Kunststoffumhüllung mechanisch entlastet werden. Diese Maßnahme empfiehlt sich insbesondere bei dem Beispiel nach Figur 3.

## Ansprüche

1. Koppelanordnung zum optischen Koppeln einer Faser (4) mit einem auf einem Substrat (1) integrierten planaren optischen Wellenleiter (2), wobei die Faser (4) mit einer Stirnfläche (41) in einer im Substrat (1) ausgebildeten und an einer Stirnfläche (21) des planaren Wellenleiters (2) endenden Nut (3) mit V-förmigem Profil derart befestigt ist, daß die Stirnfläche (41) der Faser (4) und die Stirnfläche (21) des planaren Wellenleiters (2) einander gegenüberliegen, **dadurch gekennzeichnet, daß** die Stirnfläche (21) des planaren Wellenleiters (2) an einem Ende (bei 21) eines in die Nut (3) ragenden Vorsprungs (5) des Substrats (1) angeordnet ist, wobei das Ende (bei 21) dieses Vorsprungs (5) mit der Stirnfläche (41) der Faser (4) in engem Kontakt steht.

2. Koppelanordnung nach Anspruch 1, **dadurch gekennzeichnet, daß** zwischen den im engen Kontakt miteinander stehenden Stirnflächen (41, 21) der Faser (4) und des planaren Wellenleiters (2) ein Imersionsmittel (6) angeordnet ist.

3. Koppelanordnung nach Anspruch 1, **dadurch gekennzeichnet, daß** die Faser (4) und der planare Wellenleiter (2) durch eine Schmelzverbindung (7) miteinander verbunden sind.

4. Koppelanordnung nach einem der vorhergehenden Ansprüche, **dadurch gekennzeichnet, daß** die Faser (4) durch Kunststoff (8) in der Nut (3) abgestützt ist.

5. Verfahren zur Herstellung eines Koppelelements nach einem der vorhergehenden Ansprüche, **dadurch gekennzeichnet, daß** auf einem Substrat (1) aus anisotrop ätzbarem Material mit einem darauf integrierten planaren optischen Wellenleiter (2) durch anisotropes Ätzen eine Nut (3) mit V-förmigem Profil und mit einer durch das anisotrope Ätzen bedingten schräg zur Längsache (30) der Nut (3) angeordneten Endfläche (31), an welcher eine Stirnfläche (21) des planaren Wellenleiters (2) angeordnet ist, geätzt wird, daß durch isotropes Ätzen an der schrägen Endfläche (31) der Nut (3) der an seinem Ende (bei 21) die Stirnfläche (21) des planaren Wellenleiters (2) aufweisende Vorsprung (5) erzeugt wird, und daß danach die Faser (4) mit ihrer Stirnfläche (41) derart in die Nut (3) eingebracht wird, daß die Stirnfläche (41) der Faser (4) mit der Stirnfläche (21) des planaren Wellenleiters (2) in engem Kontakt steht.

6. Verfahren nach Anspruch 5 zur Herstellung einer Koppelanordnung nach Anspruch 3, **dadurch gekennzeichnet,** daß die Faser (4) und der planare Wellenleiter (2) durch eine thermische Schweißtechnik miteinander verschweißt werden.

7. Verfahren nach Anspruch 5 oder 6, **dadurch gekennzeichnet,** daß das anisotrop ätzbare Material des Substrats (1) Silizium ist.

EP 0 420 028 A2

# FIG 1

# FIG 2

# FIG 3

5